# EUROPEAN PATENT APPLICATION

(11) **EP 1 762 879 A1**
(43) Date of publication of application: **14.03.2007**
(21) Application number: 06252008.5
(22) Date of filing: 11.04.2006
(51) Int. Cl.: G02B 26/12, G06K 7/10, G02B 26/10

(54) **Apparatus for rotating a mirrored spinner**

(30) Priority: 13.09.2005 US 224897
(71) Applicant: NRC International Inc., Dayton, Ohio 45479 (US)
(72) Inventor: Hammer, Steven Joel, Lilburn, Georgia 30047 (US); Seevers, Daniel Byron, Duluth, Georgia 30095 (US)
(74) Representative: Williamson, Brian

(57) **Abstract**

An apparatus for rotating a mirrored spinner about multiple axes. The apparatus includes a first axle which rotates about a first axis of rotation, and a second axle for mounting the mirrored spinner to the first axle, wherein the second axle rotates the mirrored spinner about a second axis of rotation.

## Description

Optical bar code scanners typically include a mirrored spinner. It would be desirable to provide an apparatus for rotating a mirrored spinner.

An apparatus for rotating a mirrored spinner is provided.

The apparatus includes a first axle which rotates about a first axis of rotation, and a second axle for mounting the mirrored spinner to the first axle, wherein the second axle rotates the mirrored spinner about a second axis of rotation.

According to another embodiment of the invention there is provided an apparatus for rotating a mirrored spinner comprising:
a motor including a shaft which rotates about a first axis of rotation; a yoke mounted to the shaft which rotates about the first axis of rotation and which includes first and second opposite arms; an axle through the mirrored spinner for mounting the mirrored spinner between the first and second opposite arms, wherein the axle rotates the mirrored spinner about a second axis of rotation; and a drive mechanism for rotating the axle.
Preferably, the apparatus further comprises another drive mechanism for rotating the motor.

Embodiments of the present invention will now be described, by way of example, with reference to the accompanying drawings, in which:
Fig. 1 is a block diagram of a bar code scanner;
Fig. 2 is a view of an example bar code scanner;
Figs. 3a-c are views of an example scan engine;
Figs. 4-6 are views of additional examples of scan engines; and
Fig. 7 is a view of an example scan engine with an additional degree of freedom.

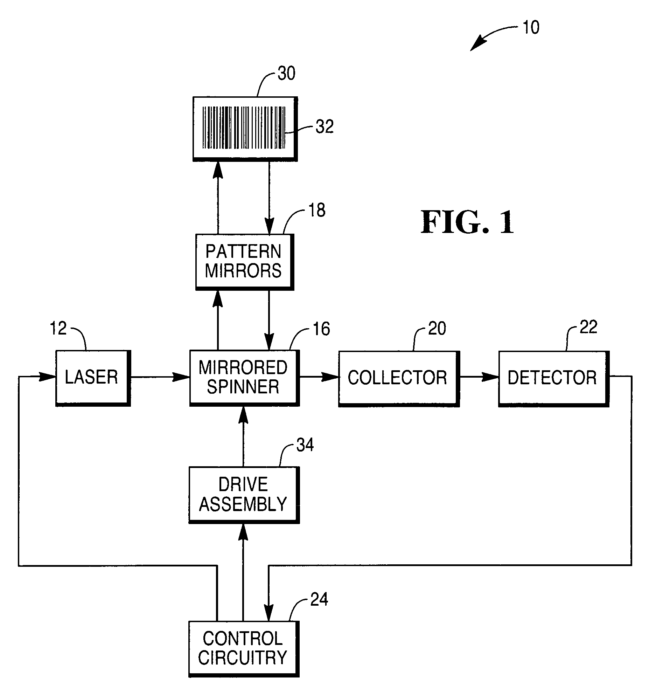

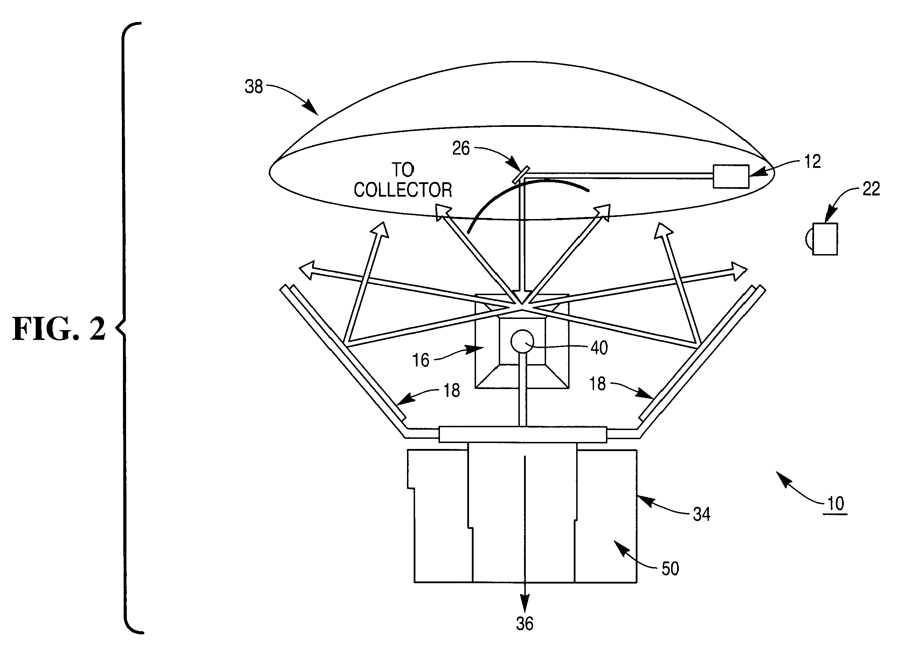

With reference to Figs. 1 and 2, an example bar code scanner 10 includes laser 12, mirrored spinner 16, pattern mirrors 18, collector 20, detector 22, and control circuitry 24.

Laser 12 produces a laser beam. Mirror flat 26 (Fig. 2) directs the laser beam towards mirrored spinner 16.

Mirrored spinner 16 directs the laser beam to pattern mirrors 18. Mirrored spinner 16 further directs light reflected from item 30 to collector 20. Mirrored spinner 16 is rotated by drive assembly 34. Mirrored spinner 16 is shown with may have any number of mirrored facets. Four facets are illustrated in Fig. 1.

Mirrored spinner 16 and drive assembly 34 form a scan engine having two axes 36 and 40 of rotation to essentially rotate scan volume 38 about axis 36 (Fig. 2). The scan engine produces a hemispherical shaped scan volume 38, which is larger than a comparable wedge shaped scan volume of a conventional single axis scan engine. In one embodiment, first axis 36 is substantially orthogonal to second axis 40, however, other angles between axes 36 and 40 are also envisioned.

First axis 36 is rotated by motor 50. In an example embodiment, motor rotates first axis 36 as high as about 1200 RPM. Drive assembly 34 produces an example speed of rotation about second axis 40 of as high as about 19,200 RPM (16:1 ratio). Other speeds are envisioned as motor technology improves. Synchronized rotation of axes 36 and 40 results in a static scan pattern at the scanner aperture.

Pattern mirrors 18 produce scanning light beams for scanning bar code 32 on item 30. Pattern mirrors 18 further collect light reflected from item 30 and direct the reflected light to mirrored spinner 16.

Collector 20 collects the reflected light from mirrored spinner 16.

Detector 22 converts the reflected light into electrical signals based upon the intensity of the reflected light.

Control circuitry 24 controls operation of laser 12 and motor 34 and decodes bar code information contained within the electrical signals received from detector 22.

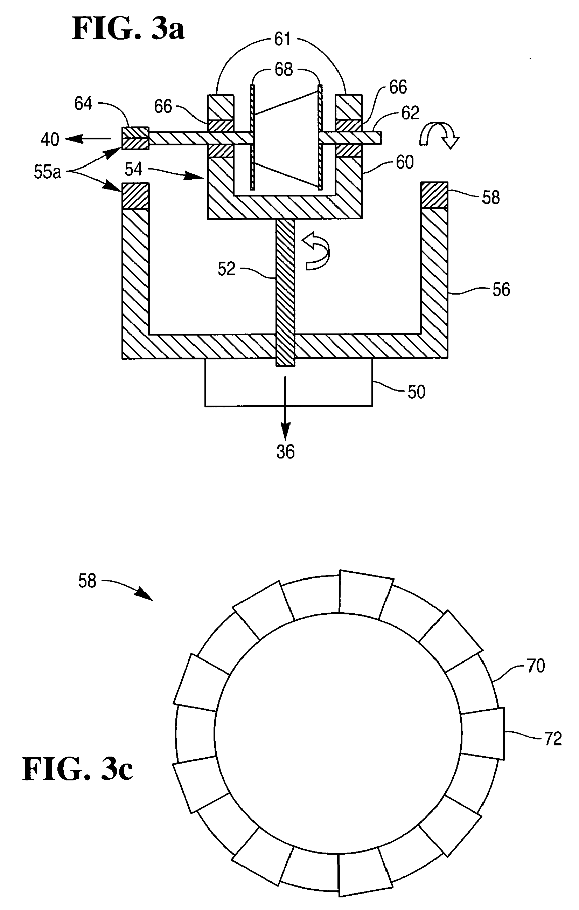

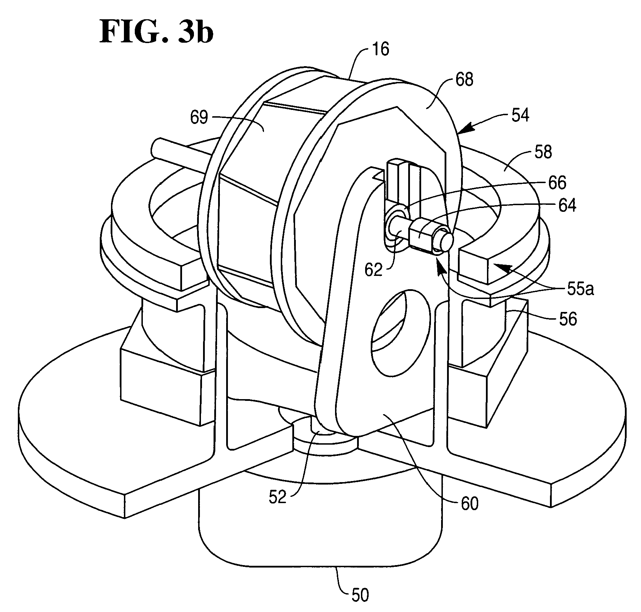

With reference to Figs. 3a and 3b, an example embodiment of drive assembly 34 is illustrated.

With reference to Figs. 3a-c, drive assembly 34 includes motor 50, shaft 52, spinner assembly 54, and spinner rotation mechanism 55.

Motor 50 is mounted in stationary fashion and rotates shaft 52.

Shaft 52 rotates spinner assembly 54 about axis 36.

Spinner assembly 54 includes yoke 60, axle 62, bearings 66, balance plates 68, and facets 69.

Yoke 60 attaches to and rotates with shaft 52. Opposite arms 61 of yoke 52 retain axle 62.

Axle 62 rotates about axis 40. Mirrored spinner 16 rotates with axle 62.

Bearings 66 are located in yoke 60. Shaft 52 rides on bearings 66.

Balance plates 68 balance rotation of mirrored spinner 16.

Facets 69 are mirrored to reflect scanning light beams and reflected light. The orientations of facets 69 vary around spinner 16 so as to direct the scanning light beams in various directions. Eight facets 69 are shown in Fig. 3b.

Spinner rotation mechanism 55 includes cylinder 56, magnet 64, and ring of magnets 58.

Cylinder 56 is mounted in stationary fashion about axis 36.

Ring of magnets 58 is mounted to cylinder 56.

Magnet 64 is mounted to axle 62 and interacts with ring of magnets 58 to rotate axle 62 as yoke 60 rotates with shaft 52. In this embodiment, magnet 64 is mounted with the poles perpendicular to axle 62. Other configurations and angles are also envisioned. For example, axle 62 may be extended and another magnet 64 may be mounted to an opposite end of axle 62 from the other.

With reference to Fig. 3c, north and south magnets 70 and 72 alternate around ring of magnets 58. Other configurations of magnets 70 and 72 are also envisioned.

As motor shaft 52 rotates spinner assembly 54, attractive and repulsive *forces from* ring of magnets 58 act on magnet 64 on axle 62 to cause rotational torque on axle 62. In one example, ring of magnets includes nine pairs of north-south magnets 70 and 72, and each pair of north-south magnets 70 and 72 causes one revolution of axle 62, resulting in a spinner rotational speed about 9 times faster than the rotational speed of shaft 52.

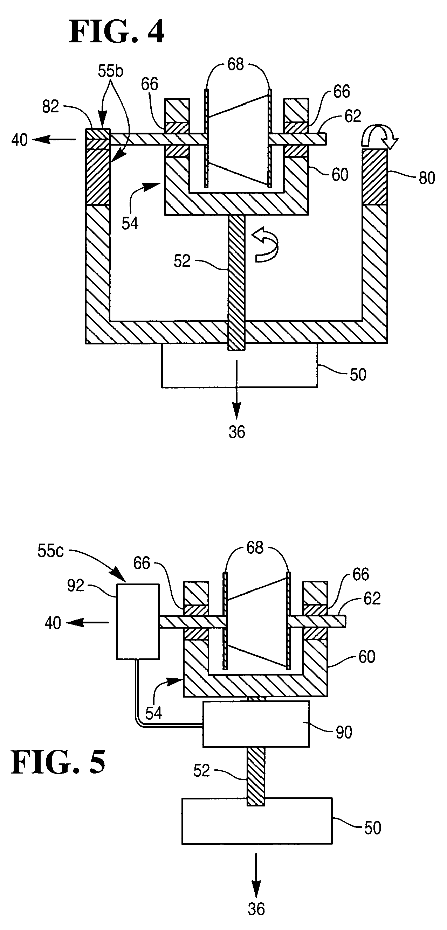

With reference to Fig. 4, an alternate embodiment includes driver mechanism 55b which relies on friction or gear teeth to rotate mirrored spinner 16. Instead of ring of magnets 58, cylinder 56 includes a friction pad or gear teeth ring 80. A friction embodiment envisions friction pad 80 interacting with axle 62 through friction to rotate axle 62. A gear embodiment envisions gear teeth ring 80 interacting with axle 62 through gear 82 to rotate axle 62.

With reference to Fig. 5, an alternate embodiment includes drive rotation mechanism 55c which relies on a second motor 92. In one embodiment, second motor 52 receives electrical power through slip ring 90 which frictionally contacts stationary electrical terminals as it rotates about axis 36. In other alternative embodiments, power to second motor 92 may be provided through conductive bearings, a battery, a capacitor, a solar cell, or a fuel cell as part of spinner assembly 54.

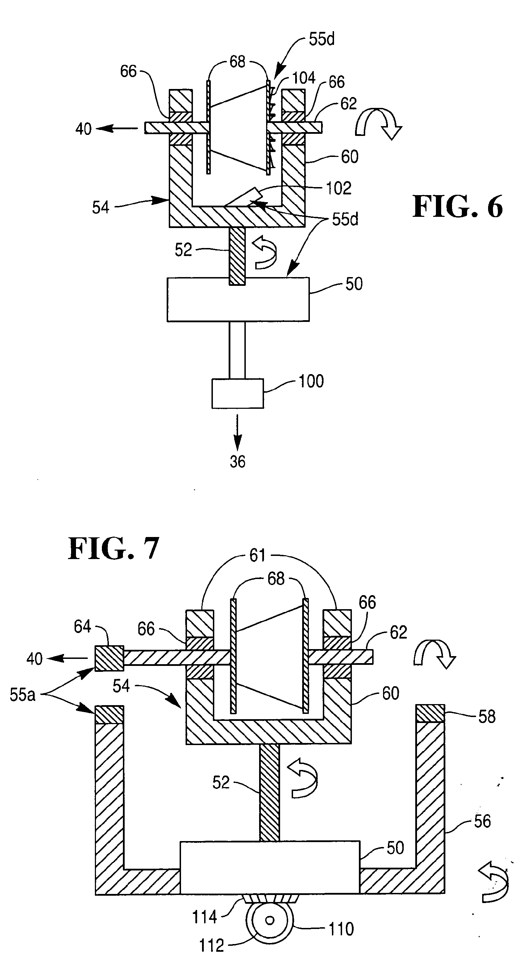

With reference to Fig. 6, an alternate embodiment includes drive rotation mechanism 55d which relies on pressurized air to rotate mirrored spinner 16. Drive rotation mechanism 55d includes pressurized air source 100, nozzle 102, and fan blades 104. Pressurized air source 100 is delivered through motor shaft 52 and rotating nozzle 102. Nozzle 102 directs pressurized air at fan blades 104 arranged around one of balance plates 68. Nozzle 102 rotates on hollow slow motor shaft 52 so it always stays aligned with spinner 16.

With reference to Fig. 7, an alternate embodiment envisions movement of the scan pattern by adding an additional degree of freedom to create a dynamic scan pattern. In this example embodiment, a rolling movement of the scan pattern is accomplished by rotating motor 50 or cylinder 56 about axis 36. Other degrees of freedom could also be added to the scan engine to move the pattern in other directions such as in azimuth or elevation.

The scan engine of Fig. 3A is used for purposes of illustration, as other scan engines may also be rotated in this way. The embodiment adds motor 110, sprocket 112, and gear 114. Motor rotates sprocket 112, which engages gear 114. Gear 114 is rigidly fixed to cylinder 56, causing it to rotate about axis 36. An example motor speed is about 60 RPM. Motor speed may be continuous or vary. Motor speed may also oscillate.

While a gear arrangement is shown, other ways of rotating cylinder 56 are also envisioned, including belts, or more magnets.

Although particular reference has been made to certain embodiments, variations and modifications are also envisioned within the scope of the following claims.

## Claims

1. An apparatus for rotating a mirrored spinner comprising:
a first axle which rotates about a first axis of rotation; and
a second axle for mounting the mirrored spinner to the first axle, wherein the second axle rotates the mirrored spinner about a second axis of rotation.

2. An apparatus as claimed in claim 1, wherein the first and second axes are substantially perpendicular.

3. An apparatus as claimed in claim 1 or claim 2, wherein the first axle includes a yoke, and wherein the second axle couples to opposite sides of the yoke.

4. An apparatus as claimed in any preceding claim, further comprising a motor for rotating the first axle, wherein the first axle includes a motor shaft.

5. An apparatus as claimed in any preceding claim, further comprising a drive mechanism for rotating the second axle.

6. An apparatus as claimed in claim 5, wherein the drive mechanism comprises:
a plurality of stationary first magnets arranged with alternating polarities around the first axle; and
a second magnet on one of the second axle which magnetically interacts with the first magnets.

7. An apparatus as claimed in claim 5, wherein the drive mechanism comprises:
a plurality of stationary first gear teeth arranged around the first axle; and
a gear on one of the second axle having second gear teeth which engage the first gear teeth.

8. An apparatus as claimed in claim 5, wherein the drive mechanism comprises:
a stationary friction pad arranged around the first axle; and
a friction roller on one of the second axle which engages the stationary friction pad.

9. An apparatus as claimed in claim 5, wherein the drive mechanism comprises:
a fan mounted to the mirrored spinner;
an air source for producing pressurized air; and
a nozzle for directing the pressurized air at the fan.

10. An apparatus as claimed in claim 5, wherein the drive mechanism comprises a motor mounted to one end of the second axle.

11. An apparatus as claimed in claim 5, further comprising a slip ring mounted to the first axle for delivering electrical power to the motor.

12. An apparatus as claimed in claim 5, further comprising a battery for delivering electrical power to the motor.

13. An apparatus as claimed in claim 5, further comprising a battery for delivering electrical power to the motor.

14. An apparatus as claimed in claim 4, further comprising:
a drive mechanism coupled to the motor shaft for rotating the second axle;
wherein the motor activates the drive mechanism to rotate the second axle.

15. An apparatus as claimed in claim 4, further comprising:
another drive mechanism for rotating the motor.

16. A bar code scanner comprising:
a laser for producing a laser beam;
a mirrored spinner for directing the laser beam to produce scanning light beams; and
an apparatus for rotating the mirrored spinner including a motor including a shaft which rotates about a first axis of rotation; and
a spinner mount coupled to the shaft and including an axle coupled to the mirrored spinner for rotating the mirrored spinner about a second axis of rotation.
